# EUROPÄISCHE PATENTANMELDUNG

(11) **EP 1 737 096 A2**
(43) Veröffentlichungstag der Anmeldung: **27.12.2006**
(21) Anmeldenummer: 06114161.0
(22) Anmeldetag: 18.05.2006
(51) Int. Cl.: H02G 3/12, H02G 3/04

(54) **Unterflurinstallationsbauteil**

(30) Priorität: 23.06.2005 DE 202005009887 U; 23.06.2005 DE 202005009888 U
(71) Anmelder: OBO Bettermann GmbH & Co. KG, 58710 Menden (DE)
(72) Erfinder: Schimek, Andreas, 58708 Menden (DE); Weissbach, Wilfried, 58708 Menden (DE); Wesch, Rainer, 58730 Fröndenberg (DE)
(74) Vertreter: Haverkamp, Jens

(57) **Zusammenfassung**

Ein Unterflurinstallationsbauteil 40 mit einem vor seinem Einbau in einen Fußboden, insbesondere einen durch Gießen zu erstellenden Fußboden unter Verwendung von Nivellierschrauben 51 abgestützten Nivellierrahmen 41 ist dadurch bestimmt, dass
- die Nivellierschrauben 51 in ihrer den Nivellierrahmen abstützenden Anordnung an ein der Innenseite des Unterflurinstallationsbauteils 40 zugehöriges Teil des Nivellierrahmens 41 angeschlossen sind und
- die Nivellierschrauben 51 von dem Nivellierrahmen 41 lösbar sind *oder* die Nivellierschrauben jeweils Teil einer ein oder mehrere weitere Elemente umfassenden Nivelliereinheit sind und wenigstens eines der eine solche Nivelliereinheit bildenden Elemente aus der Einheit lösbar ist.

## Beschreibung

Die Erfindung betrifft ein Unterflurinstallationsbauteil mit einem vor seinem Einbau in einen Fußboden, insbesondere einen durch Gießen zu erstellenden Fußboden unter Verwendung von Nivellierschrauben abgestützten Nivellierrahmen.

Unterflurinstallationsbauteile dienen zum Erstellen von Unterflurinstallationssystemen, insbesondere für elektrische Unterflurinstallationen. Bei den Unterflurinstallationsbauteilen kann es sich um Kanäle, Kanalformteile, etwa zur Richtungsänderung, Unterfluranschlussdosen oder dergleichen handeln. Ein solches Unterflurinstallationssystem ist in den Fußbodenaufbau integriert und daher mitunter auch im Estrich vergossen. Unterflurinstallationsbauteile, die estrichbündig verlegt werden sollen, müssen nivelliert werden, bevor der Estrich zur Erstellung des Bodens gegossen wird. Zu diesem Zweck verfügen zu nivellierende Unterflurinstallationsbauteile über einen Nivellierrahmen als oberseitigen Abschluss, etwa eines Kanals oder einer Unterfluranschlussdose. In einer Unterfluranschlussdose werden an dem Nivellierrahmen Geräteeinbaueinheiten, Mediensäulen, Deckel oder dergleichen angebracht. Zum Nivellieren eines solchen Rahmens sind an diesem mehrere Nivellierschrauben angeordnet, die sich gemäß einer vorbekannten Ausgestaltung an einem Bodenblech des Unterflurinstallationsbauteils abstützen. Das Bodenblech seinerseits ist zweckmäßigerweise mit Schrauben untergrundseitig festgelegt. Um ein Eindringen von Estrich in ein solches Unterflurinstallationsbauteil zu verhindern, sind zwischen dem Nivellierrahmen und Bodenblech Seitenteile als Schalungselemente angeordnet. Als Seitenteile werden u. a. Seitenschürzen aus einem flexiblen Material eingesetzt.

Aus DE 202 05 354 U1 ist eine Unterfluranschlussdose als Unterflurinstallationsbauteil bekannt, deren Nivellierschraube an der Außenseite des Nivellierrahmens durch jeweils einen Innengewindeabschnitt gehalten sind. Der Fuß der Nivellierschraube stützt sich an einem Bodenteil der Unterfluranschlussdose unter Zwischenschaltung eines Hilfsteils ab. Das zwischen dem Fuß jeder Nivellierschraube und dem Bodenteil dieses vorbekannten Unterflurinstallationsbauteils angeordnete Hilfsteil kann nach Einbinden des Unterflurinstallationsbauteils in den Fußbodenaufbau entfernt werden, um auf diese Weise die bodenseitige Abstützung des Nivellierrahmens unter Zwischenschaltung der Nivellierschraube aufzuheben. Dieses wird vor dem Hintergrund vorgenommen, eine Trittschallübertragung von dem Nivellierrahmen auf den Unterboden zu unterbinden. Der Nivellierrahmen folgt sodann zwangsfrei schwingungsbedingten Bewegungen des angrenzenden Oberbodens, wodurch bei Vorsehen eines Estrichs als Oberboden eine Entstehung von Setzrissen am Übergang zwischen dem Nivellierrahmen und dem Estrich weitestgehend vermieden wird. Um zu verhindern, dass das Hilfsteil von Estrich bedeckt wird, müssen die in den Ecken der Unterfluranschlussdose angeordneten Nivellierschrauben samt Hilfsteil durch einen separaten Seitenschürzenabschnitt abgedeckt werden. Eine solche Entkopplung ist zwar bei Unterfluranschlussdosen möglich, nicht jedoch bei Unterflurinstallationskanälen.

Bei den bei diesem vorbekannten Unterflurinstallationsbauteil eingesetzten Nivellierschrauben handelt es sich um Gewindestangen, mit jeweils einer Werkzeugaufnahme an ihrem oberseitigen Ende. In Abhängigkeit von der Höheneinrichtung des Nivellierrahmens gegenüber dem Bodenteil erstrecken sich die Nivellierschrauben bis über den oberen Rand des Nivellierrahmens hinweg. Es ist daher erforderlich, jeweils den oberen, nicht benötigten Nivellierschraubenabschnitt mit der Werkzeugaufnahme vor dem Einbinden des Unterflurinstallationsbauteils in den Fußbodenaufbau, also beispielsweise vor dem Gießen eines Estrichs abzutrennen. Dieses hat jedoch zur Folge, dass ein mitunter notwendiges Nachnivellieren des Nivellierrahmens noch vor dem Auftragen des Estrichs dann nicht mehr, nur mit Mühe oder nur mit zusätzlichen Maßnahmen möglich ist.

Ausgehend von diesem diskutierten Stand der Technik liegt der Erfindung daher die Aufgabe zugrunde, ein eingangs genanntes Unterflurinstallationsbauteil dergestalt weiter zu bilden, dass nicht nur ein Nachnivellieren vor dem Auftragen des Estrichs, sondern insbesondere auch eine Schwingungsentkopplung möglich ist, wenn es sich bei dem Unterflurinstallationsbauteil um einen Kanal handelt.

Diese Aufgabe wird erfindungsgemäß durch ein Unterflurinstallationsbauteil mit den eingangs genannten Merkmalen gelöst, bei dem
- die Nivellierschrauben in ihrer den Nivellierrahmen abstützenden Anordnung an ein der Innenseite des Unterflurinstallationsbauteils zugehöriges Teil des Nivellierrahmens angeschlossen sind und
- die Nivellierschrauben von dem Nivellierrahmen lösbar sind *oder* die Nivellierschrauben jeweils Teil einer ein oder mehrere weitere Elemente umfassenden Nivelliereinheit sind und wenigstens eines der eine solche Nivelliereinheit bildenden Elemente aus der Einheit lösbar ist.

Bei diesem Unterflurinstallationsbauteil ist der Nivellierrahmen innenseitig abgestützt. Mithin sind die Nivellierschrauben bzw. die Nivelliereinheiten in einem Abschnitt an den Nivellierrahmen angeschlossen, der auch nach dem Erstellen des Fußbodens, beispielsweise durch Gießen eines Estrichs zugänglich ist. Die der Nivellierung dienende bodenseitige Abstützung durch die Nivellierschrauben bzw. die Nivelliereinheiten kann durch Entfernen der Nivellierschrauben oder zumindest eines Teils einer Nivelliereinheit je nach Ausgestaltung des Unterflurinstallationsbauteils aufgehoben werden, so dass der Nivellierrahmen bodenseitig entkoppelt ist. Infolge der innenseitigen Abstützung der Nivellierrahmen durch die Nivellierschrauben oder die Nivelliereinheiten können diese ohne weiteres in Unterflurinstallationskanäle oder entsprechende Bauteile zum Erstellen eines solchen Kanals eingesetzt werden. Die Abstützanordnung wird zweckmäßigerweise bereits nach einem ersten Abbinden eines das Installationsbauteil einfassenden Estrichs aufgehoben, damit dann das mit seinem Nivellierrahmen von dem Estrich getragene Unterflurinstallationsbauteil eine unter Umständen eintretende Estrichabsenkung mitmacht.

Das Anordnen der Nivellierschrauben bzw. der Nivelliereinheiten an der Innenseite eines Nivellierrahmens hat auch zur Folge, dass ein solches Unterflurinstallationsbauteil unmittelbar im Bereich eines Wandabschlusses verlegt werden kann.

Bevorzugt ist eine Ausgestaltung, bei dem die Nivellierschrauben als solche oder als Teil einer Nivelliereinheit zum Herstellen der Entkopplung entfernt werden können, damit die gesamte Querschnittsfläche beispielsweise eines Unterflurinstallationskanals zum Einbau der gewünschten Leitungen genutzt werden kann.

Gemäß einem Ausführungsbeispiel greifen die Nivellierschrauben unmittelbar in eine dem Nivellierrahmen zugeordnete Gewindebohrung ein. Diese kann beispielsweise durch eine als Niet ausgebildete und auf diese Weise mit dem Nivellierrahmen verbundene Gewindehülse gebildet sein. Die darin eingreifende Nivellierschraube kann zum Herstellen der gewünschten bodenseitigen Entkopplung zu gegebener Zeit ohne weiteres aus der Hülse herausgeschraubt werden. In einer weiteren Ausgestaltung ist vorgesehen, eine solche Gewindehülse lösbar an den Nivellierrahmen anschließen zu können, beispielsweise durch Vorsehen einer schlüssellochförmigen Anschlussöffnung, in die die Gewindehülse eingesetzt und aus welcher die Gewindehülse samt Nivellierschraube herausgenommen werden kann.

Angeschlossen sein können die Nivellierschrauben an dem Nivellierrahmen auch durch eines oder mehrere Halteelemente, durch die die Nivellierschrauben in Richtung der Längsachse gegenüber dem Nivellierrahmen fixiert sind. Zum Höheneinrichten des Nivellierrahmens greifen die Nivellierschrauben mit ihrem Fuße in ein gegenüber dem Nivellierrahmen ortsfestes Widerlager ein, das beispielsweise ein Gewinde als Teil eines Bodenteils des Unterflurinstallationsbauteils oder auch ein im Unterboden eingesetzter Dübel sein kann. Die Halteschrauben des Nivellierrahmens können allesamt durch ein Halteelement an den Nivellierrahmen angeschlossen sein. Gemäß einer weiteren Ausgestaltung ist vorgesehen, jeder Nivellierschraube ein eigenes Halteelement zuzuordnen. Der Vorteil der Konzeption des Anschließens des oder der Nivellierschrauben an den Nivellierrahmen unter Verwendung von Halteelementen liegt darin begründet, dass nach Entfernen des oder der Halteelemente die Nivellierschrauben ohne weiteres entfernt werden können, wenn der Nivellierrahmen in den Fußbodenaufbau eingebunden ist, beispielsweise nach Abbinden eines das Unterflurinstallationsbauteil einschließenden und sodann den Nivellierrahmen tragenden Estrichs. Ist der Nivellierrahmen in den Oberboden, beispielsweise den Estrich eingebunden, können darüber hinaus die Nivellierschrauben ohne weiteres nach Lösen des oder der Halteelemente entfernt werden, um eine Entkopplung zwischen dem Nivellierrahmen und dem Untergrund herbeizuführen. Eine Abstützung des Nivellierrahmens über die Nivellierschrauben ist nach Abbinden des Estrichs nicht mehr notwendig, da der Nivellierrahmen dann von diesem getragen wird.

Gemäß einer ersten Ausgestaltung des vorbeschriebenen Ausführungsbeispiels verfügen die Nivellierschrauben über einen Schraubenkopf, der im Durchmesser größer ist als der daran angrenzende Schraubenschaft. Mit der Unterseite des Schraubenkopfes liegen diese an der Oberseite des Nivellierrahmens an, so dass dadurch eine Relativbewegung zwischen einer solchen Nivellierschraube und dem Nivellierrahmen in einer Richtung begrenzt ist. Das oder die Halteelemente greifen zumindest mit einem Abschnitt über die Oberseite des Schraubenkopfes der Nivellierschraube, so dass dann der Schraubenkopf zwischen dem Halteelement und dem Nivellierblech gefangen und somit die Nivellierschraube in beiden Richtungen ihrer Längsachse fixiert ist. Das den Schraubenkopf bedeckende Halteelement lässt die Werkzeugaufnahme des Schraubenkopfes frei, so dass zum Betätigen der darunter befindlichen Nivellierschraube durch das Halteelement hindurch ein Werkzeug hindurch geführt werden kann. Typischerweise verfügt ein Nivellierrahmen über eine zumeist zentral angeordnete Öffnung. Als Halteelement kann ein Montageschutzblech dienen, das während des Einbaues des Unterflurinstallationsbauteils diese Öffnung bedeckt. Abschnitte eines solchen Montageschutzblechs übergreifen die Köpfe der Nivellierschrauben, so dass bei einer solchen Konzeption kein zusätzliches Halteelement benötigt wird und die Funktion des Halteelementes von dem Montageschutzblech mit übernommen wird. Ein solches Halteelement ist beispielsweise mittels einer von oben betätigbaren Schraube an dem Nivellierrahmen angeschlossen.

Gemäß einer weiteren Ausgestaltung dieses Ausführungsbeispiels ist vorgesehen, jeder Nivellierschraube ein eigenes, separates Halteelement zu ihrer Fixierung zuzuordnen. Ein solches Halteelement kann nach Art einer Spange, einen Randabschnitt des Nivellierrahmens einfassend ausgebildet sein. Mit einem oberen Schenkel überdeckt die Spange den Schraubenkopf der Nivellierschraube. Der untere Schenkel untergreift den Nivellierrahmen, der zu diesem Zweck vorzugsweise als Nivellierblech ausgebildet ist. Die beiden Schenkel einer solchen Spange sind starr zueinander. In dem oberen Schenkel befindet sich vorzugsweise eine Betätigungsöffnung, deren Durchmesser kleiner ist als der Schraubenkopf, jedoch groß genug, um ein Werkzeug zum Betätigen der Nivellierschraube hindurch führen zu können.

Gemäß einer weiteren Ausgestaltung verfügt jede Nivellierschraube unterhalb ihres Kopfes über eine umlaufende Nut. Das jeder Nivellierschraube zugeordnete Halteelement ist nach Art einer Haltespange gegabelt ausgebildet, dergestalt, dass die beiden Schenkel, gegebenenfalls zusammen mit dem hinteren, die beiden Schenkel verbindenden Abschnitt der Gabelung in die Nut der Nivellierschraube zum Fixieren derselben an dem Nivellierrahmen eingebracht werden. Somit ist bei dieser Ausgestaltung die Nivellierschraube in der einen Richtung durch den Schraubenkopf und in der anderen Richtung durch das Halteelement an den Nivellierrahmen angeschlossen. Anstelle einer umlaufenden Nut ist es ebenfalls möglich, eine den Schraubenschaft querende Bohrung vorzusehen, in die ein Splint als Halteelement eingesetzt ist.

Als Nivellierrahmen ist im Rahmen dieser Ausführungen derjenige Rahmen zu verstehen, der vor dem Einbau des eigentlichen Bodens bodenseitig durch die Nivellierschrauben bzw. die Nivelliereinheiten abgestützt ist. Dieses umfasst nicht nur diejenigen Elemente, an die die Nivellierschrauben oder die Nivelliereinheiten unmittelbar angeschlossen sind, sondern auch zusätzliche Elemente, die einen solchen Nivellierrahmen ausmachen können, wie beispielsweise Traversen oder dergleichen.

Nachfolgend ist die Erfindung anhand von Ausführungsbeispielen unter Bezugnahme auf die beigefügten Figuren beschrieben. Es zeigen:
- **Fig. 1:**: Eine perspektivische Ansicht nach Art einer Explosionsdarstellung eines als Unterfluranschlussdose ausgebildeten Unterflurinstallationsbauteils,
- **Fig. 2:**: einen vergrößerten Teilquerschnitt durch den Nivellierrahmen der Unterfluranschlussdose der Figur 1,
- **Fig. 3:**: den Nivellierrahmen der Figur 1 mit einem darauf angeordneten Montageschutzblech der Figur 1 in einer Explosionsdarstellung,
- **Fig. 4:**: eine zum Teil geschnittene Darstellung der in einem Fußbodenaufbau eingebundenen Unterfluranschlussdose der Figur 1,
- **Fig. 5a, 5b:**: einen Ausschnitt eines im Schnitt dargestellten Nivellierrahmens mit einer daran angeschlossenen Nivellierschraube (Figur 5a) sowie die Nivellierschraube und ein die Nivellierschraube fixierendes Halteelement in Einzeldarstellungen (Figur 5b),
- **Fig. 6:**: ein weiteres Unterflurinstallationsbauteil, ausgebildet als Kanal,
- **Fig. 7a, 7b:**: einen Ausschnitt eines im Schnitt dargestellten Nivellierrahmens mit einer daran angeschlossenen Nivellierschraube (Figur 7a) gemäß einer weiteren Ausgestaltung sowie die den Nivellierrahmen durchgreifende Nivellierschraube und das die Nivellierschraube fixierende Halteelement in zwei unterschiedlichen Stellungen (Figur 7b),
- **Fig. 8a - 8c:**: noch ein weiteres Unterflurinstallationsbauteil, ausgebildet als Kabelkanal in einer in Längsrichtung blickenden Seitenansicht mit Traversen (Figur 8a), eine perspektivische Ansicht einer bodenseitig abgestützten Traverse (Figur 8b) sowie die Traverse der Figur 8b beim Aufheben der bodenseitigen Abstützung (Figur 8c),
- **Fig. 9:**: eine perspektivische Darstellung einer Gewindehülse zum Anschließen von Nivellierschrauben an die Traverse des Unterflurinstallationsbauteils der Figuren 8a - 8c und
- **Fig. 10:**: eine perspektivische Ansicht einer weiteren Traverse für ein als Kanal ausgebildetes Unterflurinstallationsbauteil.

Ein als Unterfluranschlussdose 1 ausgebildetes Unterflurinstallationsbauteil umfasst einen als Blech ausgebildeten Nivellierrahmen 2 mit einer durch ein Montageschutzblech 3 verdeckten zentralen Öffnung 4 (gestrichelt dargestellt). Das Montageschutzblech 3 dient als Verschluss der Öffnung 4 beim Gießen eines Estrichs zum Einbinden der Unterfluranschlussdose 1 in einen Fußbodenaufbau und verhindert ein Eindringen von Schmutz in das Innere der Unterfluranschlussdose 1. Der Nivellierrahmen 2 verfügt über mehrere Nivellierschrauben 5, die zum Halten des Nivellierrahmens 2 unverlierbar an diesem befestigt sind. Zum Verankern des Nivellierrahmens 2 mittels seiner Nivellierschrauben 5 im Unterboden dienen Dübel 6. Die Unterfluranschlussdose 1 verfügt über einen höhenanpassbaren Schalungsrahmen 7, der bei dem dargestellten Ausführungsbeispiel aus einem Schaumstoff hergestellt ist. Der Schalungsrahmen 7 stellt somit die miteinander verbundenen höhenanpassbaren Seitenteile der Unterfluranschlussdose 1 dar. Durch den Schalungsrahmen 7 wird die Innenseite der Unterfluranschlussdose 1 von der Außenseite derselben getrennt. Aufgrund seiner Materialeigenschaften ist der Schalungsrahmen 7 nachgiebig und weist zudem elastische Materialeigenschaften auf. Unterhalb des Schalungsrahmens 7 ist ein Rahmenbauteil 8 angeordnet. Das Rahmenbauteil 8 ist flach gehalten und kann beispielsweise ein Blech oder Kunststoffteil sein. Das Rahmenbauteil 8 weist eine Größe auf, dass dieses innerhalb des Schalungsrahmens 7 angeordnet werden kann. Dem innerhalb des Schalungsrahmens 7 angeordneten Rahmenbauteil 8 kommt sodann der Zweck einer innenseitigen Abstützung des Schalungsrahmens 7 zu. Das Rahmenbauteil 8 dient des Weiteren als Führung für die Nivellierschrauben 5 und verfügt dementsprechend über Bohrungen, durch die die Nivellierschrauben 5 hindurchgreifen. Das Rahmenbauteil 8 kann quasi an beliebiger Stelle bezüglich der Höhe des Schalungsrahmens 7 angeordnet sein und befindet sich typischerweise auf der Oberseite der von der Unterfluranschlussdose 1 zugeführten Kanälen. Auf den Einsatz eines solchen Rahmenbauteils 8 kann jedoch auch verzichtet werden.

An dem Nivellierrahmen 2 können Estrichanker (nicht dargestellt) angebracht sein, die bei Einsatz der Unterfluranschlussdose 1 in einem Estrich die Verankerung mit dem Estrich verbessern.

Der aus einem Schaumstoff bestehende Schalungsrahmen 7 weist im Bereich der Mitte seiner geraden Abschnitte Materialaussparungen 9 auf, durch die die Dicke des Rahmens 7 reduziert wird. Durch diese den Schalungsrahmen 7 an seinen Längsseiten strukturierende Maßnahme ist der Grad der Nachgiebigkeit bei einer in vertikaler Richtung auf den Schalungsrahmen 7 wirkenden Kraft gegenüber benachbarten Abschnitten des Schalungsrahmens 7 erhöht; mithin sind bei Anlegen einer solchen Kraft diese Abschnitte des Schalungsrahmens 7 weicher. Die kerbartigen Materialaussparungen 9 dienen darüber hinaus als Zentrierhilfe sowie zur Vergrößerung der Auflagefläche des Nivellierrahmens 2 mit seiner Unterseite auf dem die Unterfluranschlussdose 1 einfassenden Estrich.

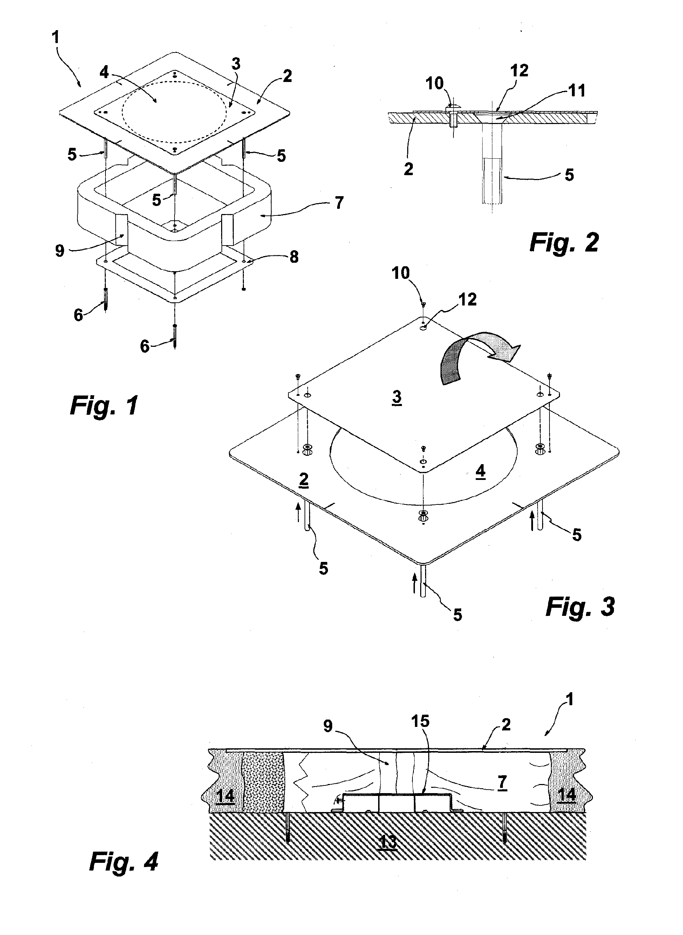

Das Montageschutzblech 3 ist mittels einzelner Schrauben 10 an dem Nivellierrahmen 2 befestigt. Das Montageschutzblech 3 übergreift mit seinen Eckabschnitten die Köpfe 11 der Nivellierschrauben 5, wie dieses in dem vergrößerten Teilschnitt des Nivellierrahmens 2 in Figur 2 dargestellt ist. Die Nivellierschrauben 5 weisen jeweils eine Werkzeugaufnahme, beispielsweise eine Kreuzschlitzvertiefung in ihrem Kopf zum Betätigen der Nivellierschrauben 5 auf. In dem den Schraubenkopf 11 überdeckenden Abschnitt des Montageschutzbleches 3 ist jeweils eine Betätigungsöffnung 12 eingebracht, deren Durchmesser kleiner ist als der Durchmesser des Kopfes 11 der Nivellierschrauben 5. Der Kopf 11 der Nivellierschrauben 5 stützt sich somit unterseitig an der Oberseite des Nivellierrahmens 2 (bei dem dargestellten Ausführungsbeispiel in einer Senkbohrung) ab. Oberseitig grenzt der Schraubenkopf 11 an die Unterseite des Montageschutzbleches 3. Die Nivellierschrauben 5 der Unterfluranschlussdose 1 sind daher an dem Nivellierrahmen 2 fixiert, und zwar insbesondere in Richtung der Längserstreckung der Nivellierschrauben 5. Eine Betätigung der Nivellierschrauben 5, die sich mit ihrem unteren Abschnitt in jeweils einem zuvor bodenseitig festgesetzten Dübel 6 abstützen, resultiert sodann in einem Anheben oder einem Absenken des Nivellierrahmens 2.

Nach Einbinden der Unterfluranschlussdose 1 in einen Fußbodenaufbau, beispielsweise nach Vergießen derselben in einem Estrich, werden die Schrauben 10 zum Entfernen des Montageschutzbleches 3 gelöst, um die zentrale Öffnung 4 zum Einbringen der gewünschten Geräteinstallationen in die Unterfluranschlussdose 1 von dem Nivellierrahmen 2 entfernt. Der Nivellierrahmen 2 wird nach Abbinden des Estrichs von diesem getragen. Nach Entfernen des Montageschutzbleches 3 können die Nivellierschrauben 5 zum Entkoppeln des Nivellierrahmens 2 von dem Unterboden entfernt werden. Nach Entfernen der Nivellierschrauben 5 besteht keine direkte schwingungsübertragende Verbindung mehr zwischen dem Nivellierrahmen 2 und dem Unterboden. Die in einen solchen Fußbodenaufbau eingebundene Unterfluranschlussdose 1 ist in Figur 4 dargestellt. Der Unterboden ist darin mit dem Bezugszeichen 13 und der den Nivellierrahmen 2 tragende und den Schaumstoffschalungsrahmen 7 einfassende Estrich mit dem Bezugszeichen 14 gekennzeichnet. Die Nivellierschrauben 5 sind bei der in Figur 4 dargestellten Situation bereits entfernt worden.

In die Unterfluranschlussdose 1 mündet ein Kanal 15. Aus Figur 4 wird ebenfalls deutlich, dass sich infolge der Materialeigenschaften des Schalungsrahmens 7 dieser mit seinem unteren Abschluss an die Gegebenheiten des Untergrundes, insbesondere an die Kontur des Kanals 15 beim Einrichten des Nivellierrahmens 2 angepasst hat.

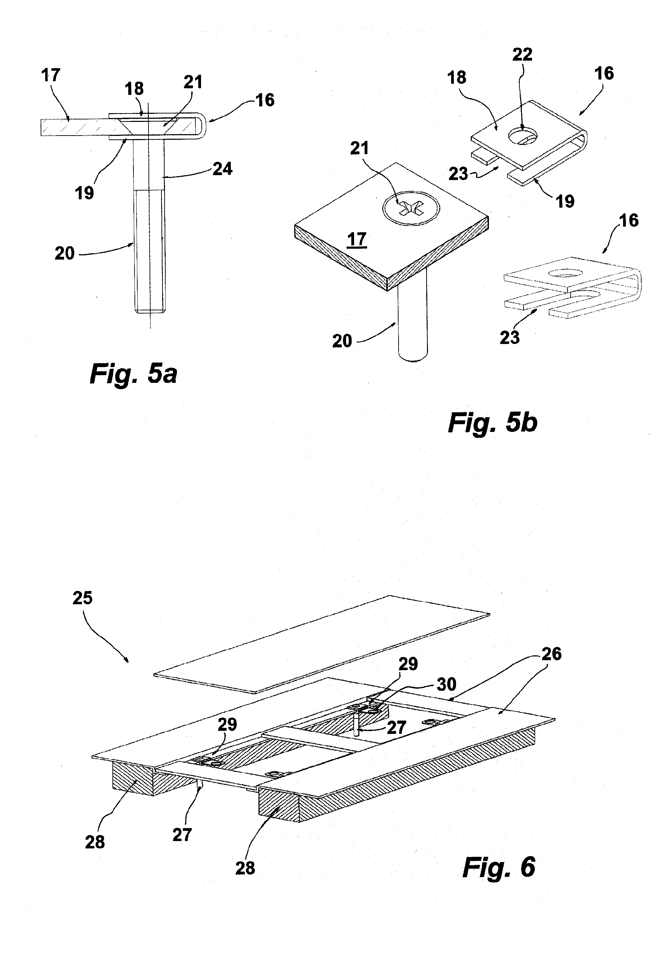

Während bei dem in Figur 1 dargestellten Ausführungsbeispiel ein einziges Halteelement, nämlich das Montageschutzblech 3, zum Fixieren der Nivellierschrauben 5 an dem Nivellierrahmen 2 dient, ist in Figuren 5a, 5b ein weiteres Ausführungsbeispiel mit einem jeder Nivellierschraube zugeordneten Halteelement 16 dargestellt. Mithin dient das Halteelement 16 zum Anschließen der Nivellierschraube an den Nivellierrahmen. Das Halteelement 16 ist nach Art einer einen Rand eines Nivellierrahmens 17 einfassenden Spange ausgebildet und umfasst einen oberen Schenkel 18 sowie einen unteren Schenkel 19. Während sich die Nivellierschraube 20 des in diesen Figuren dargestellten Ausführungsbeispiels ebenso wie die Nivellierschrauben 5 des in den Figuren 1 bis 4 beschriebenen Ausführungsbeispiels mit der Unterseite ihres Kopfes 21 an der Oberseite des als Blech ausgebildeten Nivellierrahmens 17 in einer Senkbohrung abstützt, dient der obere Schenkel 18 des Halteelementes 16 zum Fixieren der Nivellierschraube 20 in der entgegengesetzten Richtung. Der obere Schenkel 18 übergreift die Oberseite des Kopfes 21 der Nivellierschraube 20 und verfügt über eine Betätigungsöffnung 22, deren Durchmesser kleiner ist als der Durchmesser des Kopfes 21, um ein Werkzeug zum Betätigen der Nivellierschraube 20 hindurchführen zu können. Der untere Schenkel 19 des Halteelementes 16 ist gegabelt ausgebildet und verfügt zwischen seinen beiden Gabeln über eine Ausnehmung 23 mit einer lichten Weite, dass darin der an den Schraubenkopf grenzende Schaft 24 der Nivellierschraube 20 einpasst. Die beiden Gabeln des unteren Schenkels 19 dienen sodann zum Ausrichten des Halteelementes 16, damit seine Betätigungsöffnung 22 fluchtend mit der in den Schraubenkopf 21 eingebrachten Werkzeugaufnahme angeordnet ist. Das Halteelement 16 ist als solches starr bzw. im Wesentlichen starr, damit die gewünschte Anbindung der Nivellierschraube 20 an den Nivellierrahmen 17 grundsätzlich ohne eine Nachgiebigkeit des Halteelementes 16 gegeben ist. Gleichwohl kann das Halteelement 16 eine gewisse Materialelastizität aufweisen, damit dieses unter Vorspannung stehend den Rand des Nivellierrahmens 17 einfassen kann. Bei dem vorgenannten Rand des Nivellierrahmens kann es sich um den eine Öffnung einschließenden Innenrand handeln, so dass die Halteelemente innenseitig bezüglich der Seitenteile des Unterflurinstallationsbauteils angeordnet sind. Die Halteelemente können ebenfalls an einen anderen Teil des Nivellierrahmens, beispielsweise eine Traverse oder dergleichen angeschlossen sein.

Nach Einbinden des Unterflurinstallationsbauteils mit dem Nivellierrahmen 17 in einen Fußbodenaufbau, der beispielsweise ausgebildet sein kann wie der in Figur 4 gezeigte, werden die Halteelemente 16 von dem Rand des Nivellierrahmens 17 abgezogen und die Nivellierschrauben 20 entfernt, um die direkte Schwingungsübertragung von dem Nivellierrahmen 17 auf den Unterboden zu unterbrechen. Ebenso gut bewegt sich der Nivellierrahmen 17 nach Entfernen der Nivellierschrauben 20 mit dem umgebenden Estrich mit, beispielsweise bei einer Absenkung desselben.

Figur 6 zeigt ein weiteres Unterflurinstallationsbauteil, das als Kanal 25 ausgebildet ist. Der Kanal 25 weist ebenso wie die Unterfluranschlussdose 1 ein oberes als Nivellierrahmen 26 ausgebildetes Bauteil auf. Der Nivellierrahmen 26 dieses Ausführungsbeispiels besteht aus einzelnen Rahmenelementen, den äußeren, der Längserstreckung des Kanals 25 folgenden Rahmenbauteilen sowie den quer dazu verlaufenden Traversen zum Verbinden der vorgenannten Rahmenbauteile. Der Nivellierrahmen 26 ist mittels innenseitig bezüglich der Seitenteile angeordneter Nivellierschrauben 27 bodenseitig verankert. Zum Ausbilden der Seitenwände des Kanals 25 dienen zwei Schaumstoffstreifen 28, die unterhalb des Nivellierrahmens 26 angeordnet sind. Die Nivellierschrauben 27 sind ebenso wie die Nivellierschrauben 20 jeweils mit einem einzelnen, separaten Halteelement 29 an den Nivellierrahmen 26 angeschlossen. Die Halteelemente 29 sind grundsätzlich aufgebaut wie das zuvor beschriebene Halteelement 16. Sie unterscheiden sich von den Halteelementen 16 dadurch, dass die Halteelemente 29 eine laschenartige, sich in die Kanalöffnung erstreckende Betätigungshandhabe 30 aufweisen. Anhand der Betätigungshandhabe 30 können die Halteelemente 29 ohne weiteres zur Entkopplung des Nivellierrahmens 26 von dem Unterboden von dem Nivellierrahmen 26 abgezogen werden.

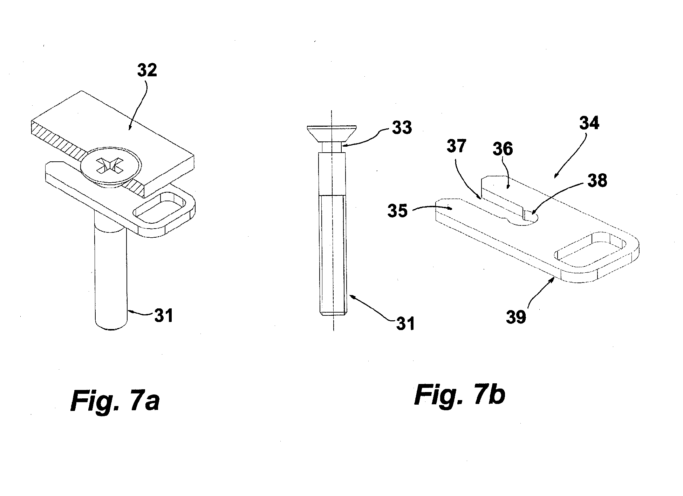

Figuren 7a und 7b zeigen eine weitere Ausgestaltung zum Anschließen einer Nivellierschraube 31 an einen Nivellierrahmen 32 eines ansonsten nicht näher dargestellten Unterflurinstallationsbauteils. Die Nivellierschraube 31 durchgreift mit ihrem Kopf den Nivellierrahmen 32, so dass sich die Unterseite des Kopfes an der Oberseite des Nivellierrahmens (hier eine Senkbohrung) abstützt. Die Nivellierschraube 31 verfügt unterhalb ihres Kopfes über eine umlaufende Nut 33. Die Nut 33 ist in demjenigen Abschnitt des Schaftes der Nivellierschraube 31 angeordnet, der unmittelbar an der Unterseite des Nivellierrahmens 32 angeordnet ist. Zum Fixieren der Nivellierschraube 31 am Nivellierrahmen 32 dient ein gegabeltes Halteelement 34. Durch zwei Schenkel 35, 36 ist eine der Längserstreckung des Halteelementes 34 folgende Aufnahme 37 gebildet, die in einen hinterschnittenen Abschnitt 38 mündet. Die Schenkel 35, 36 sind aufgrund der Materialelastizität des Halteelementes 34 gegeneinander bewegbar. Die lichte Weite des hinterschnittenen Abschnittes 38 entspricht dem Außendurchmesser der Nut 33 der Nivellierschraube 31. Zum Halten der Nivellierschraube 31 an dem Nivellierrahmen 32 wird das Halteelement 34 mit seinen Schenkeln 35, 36 in die umlaufende Nut 33 eingeführt, bis der durch die Nut 33 gebildete Schaftabschnitt der Nivellierschraube 31 in dem hinterschnittenen Abschnitt 38 des Halteelementes eingebracht ist. Die Nivellierschraube 31 ist sodann unverlierbar und insbesondere in Richtung ihrer Längserstreckung in beiden Richtungen an den Nivellierrahmen 32 angeschlossen. Eine Betätigungshandhabe 39 dient zum erleichterten Entfernen des Halteelementes 34, wenn die Nivellierschraube 31 von dem Nivellierrahmen 32 gelöst werden soll.

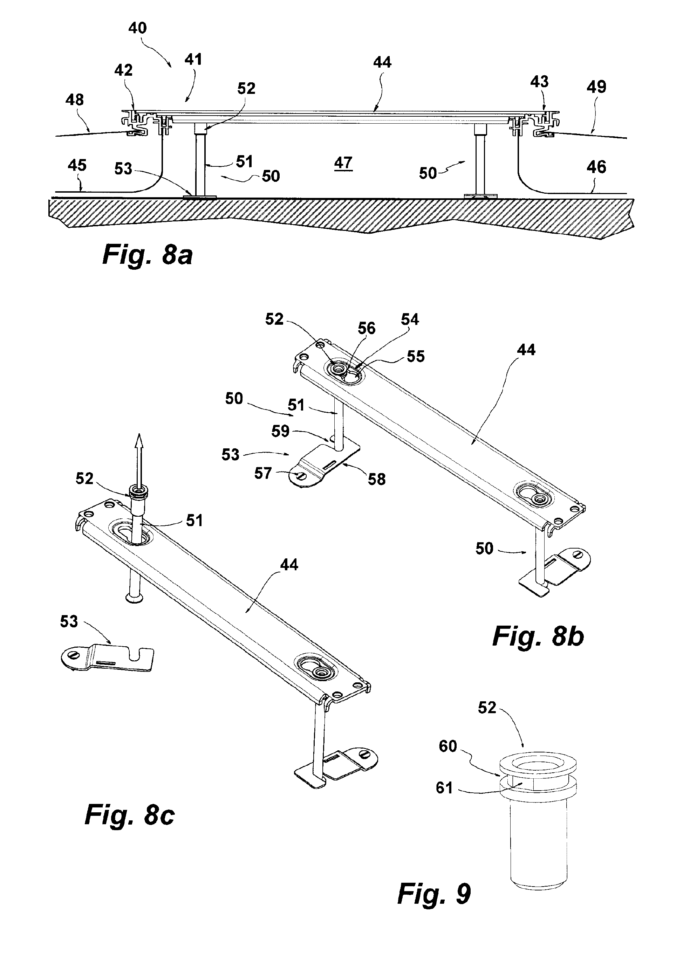

Ein weiteres als Kabelkanal 40 ausgebildetes Unterflurinstallationsbauteil ist in Figur 8a gezeigt. Der Kabelkanal 40 umfasst einen Nivellierrahmen 41, der aus der Längserstreckung des Kanals folgenden Seitenprofilen 42, 43 und mehrerer, die Seitenprofile 42, 43 verbindenden Traversen 44 besteht. Die Traversen 44 sind unlösbar an die Seitenteile 42, 43 angeschlossen. Die Seitenprofile 42, 43 tragen jeweils eine Seitenschürze 45, 46 aus einem flexiblen Material, beispielsweise einem Drahtgewebe. Die Seitenschürzen 45, 46 dienen zum Verhindern des Eindringens von flüssigem Estrich in den zu erstellenden Kanalhohlraum 47. Somit trennen die Seitenschürzen 45, 46 das den Kanalhohlraum 47 bildende Innere des Kabelkanals 40 von dessen Außenseite. An den Seitenprofilen 42, 43 sind nach außen abragende Estrichanker 48, 49 angeschlossen. Ist der Kabelkanal 40 im Estrich eingebettet, trägt der Estrich den Nivellierrahmen 41, so dass eine weitere bodenseitige Abstützung des Nivellierrahmens 41 nicht notwendig ist. Vor dem Einbringen eines Estrichs ist der Nivellierrahmen 41 durch jeweils zwei eine Traverse 44 tragende Nivelliereinheiten 50 bodenseitig abgestützt. Jede Nivelliereinheit 50 umfasst eine Nivellierschraube 51, eine Gewindehülse 52 sowie einen bodenseitig angeschlossenen Schwenkriegel 53. Die Gewindehülse 52 ist an die Traverse 44 angeschlossen. Die Nivellierschraube 51 greift mit ihrem Gewinde in die Gewindehülse 52 ein und stützt sich bodenseitig mittels eines Fußes ab. Durch entsprechendes Drehen der Nivellierschraube 51 ist sodann der Nivellierrahmen 41 in seiner Höhe gegenüber dem Unterboden einrichtbar. Die Gewindehülse 52 ist zu diesem Zweck drehmomentschlüssig an der Traverse 44 gehalten.

Die Abstützanordnung des Nivellierrahmens 41 ist in einer perspektivischen Darstellung anhand der Traverse 44 in Figur 8b gezeigt. Zum Anschließen der Nivelliereinheiten 50 an die Traverse 44 mittels der Gewindehülse 42 verfügt die Traverse 44 über jeweils eine schlüssellochförmige Aufnahmeöffnung 54. Die Aufnahmeöffnung 54 verfügt über einen im Durchmesser größeren Einsetzabschnitt 55 und einen bezüglich seiner lichten Weite schmaleren Halteabschnitt 56. Figur 8b zeigt die beiden Gewindehülsen 52 in ihrer in den Halteabschnitt 56 eingeschobenen Stellung. Zum Fixieren der Nivellierschrauben 51 mit ihren Gewindehülsen 52 in dieser Stellung dienen die Schwenkriegel 53. Die Schwenkriegel 53 sind bodenseitig mittels einer Schraube 57 verankert. Der Schwenkriegel 53 ist dabei bodenseitig festgelegt, damit sein Riegelabschnitt 58 mit der Nivellierschraubenaufnahme 59, die den Fuß der Nivellierschraube 51 übergreift, nicht ohne weiteres verschwenkt werden kann.

Zum Herstellen einer Entkopplung des Nivellierrahmens 41 vom Unterboden werden die Nivelliereinheiten 50, zumindest die Nivellierschraube 51 mit ihrer Gewindehülse 52 entfernt. Zu diesem Zweck wird der Schwenkriegel 53, wie in Figur 8c gezeigt, in seine eine Verriegelung der Nivellierschraube 51 freigebende Stellung verschwenkt. Anschließend kann die Gewindehülse 52 mit der darin eingreifenden Nivellierschraube 51 aus dem Halteabschnitt 56 der Aufnahmeöffnung 54 in den Einsetzabschnitt 55 geschoben und anschließend, wie in Figur 8c gezeigt, in Pfeilrichtung nach oben herausgezogen werden. Bei Bedarf kann ebenfalls der Schwenkriegel 53 bodenseitig entfernt werden. Dieses ist grundsätzlich jedoch nicht notwendig.

Zum Anschließen der Gewindehülse 52 an die Traverse 44 verfügt die Gewindehülse 52, wie in Figur 9 gezeigt, über eine umlaufende Nut 60. Die Nut verfügt über diametral einander gegenüberliegende ungekrümmte Abschnitte 61, deren Abstand voneinander der lichten Weite des Halteabschnitts 56 der Aufnahmeöffnung 54 entspricht. Ein Einschieben der Gewindehülse 52 in den Halteabschnitt 56 ist daher nur möglich, wenn die ungekrümmten Abschnitte 61 der Nut 60 an den den Halteabschnitt 56 in Längsrichtung begrenzenden Traversenabschnitten anliegen. Dadurch ist die Gewindehülse 52 drehmomentschlüssig an die Traverse 44 angeschlossen, so dass ein Drehen der darin eingreifenden Nivellierschraube 51 unmittelbar zu einer Höheneinrichtung der Traverse 44 und damit des gesamten Nivellierrahmens 41 führt.

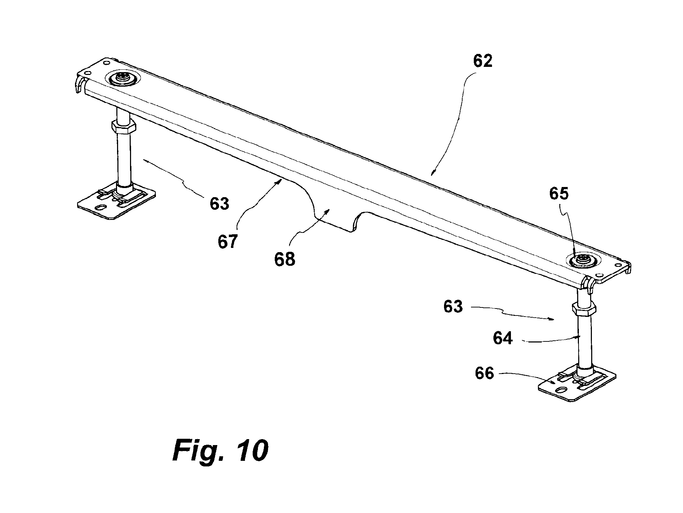

Figur 10 zeigt ein weiteres Ausführungsbeispiel einer Traverse 62 als Teil eines im Übrigen nicht näher dargestellten Kabelkanals. Die Traverse 62 ist bodenseitig über Nivelliereinheiten 63 abgestützt. Die Nivellierschrauben 64 dieser Nivelliereinheiten 63 greifen in eine drehmomentschlüssig an der Traverse 62 gehaltene Gewindehülse 65 ein. Die Gewindehülse 65 ist prinzipiell aufgebaut wie die zu Figur 9 beschriebene Gewindehülse 62, jedoch im Unterschied zu dieser in einem Nietprozess starr mit der Traverse 62 verbunden. Die Nivellierschrauben 64 stützen sich bodenseitig auf einem Hilfsteil 66 ab. Zum Herstellen einer Entkopplung der Traverse 62 gegenüber dem Unterboden und damit des gesamten Nivellierrahmens kann das Hilfsteil 66 durch Schieben von dem unteren Fuß der Nivellierschraube 64 entfernt werden, so dass anschließend die Nivellierschraube 64 bodenseitig nicht mehr abgestützt ist. Falls gewünscht, kann die Nivellierschraube 64 aus der Gewindehülse 65 herausgeschraubt werden.

Die Traverse 62 dient insbesondere zum Ausbilden breiter Kanäle, die keine innere Abstützung benötigen. Zu diesem Zweck weist die Traverse 62 die in Figur 10 erkennbare Trägerform auf. Bei der Traverse 62 handelt es sich um ein beidseitig abgekantetes Blechstück, wobei die beiden abgekanteten Seitenwangen 67 in Richtung zum Unterboden abweisend abgekantet sind. Die Höhe der Seitenwangen nimmt in einem ersten Abschnitt ausgehend von dem äußeren Rand der Traverse 62 zu ihrer Mitte hin allmählich zu und geht über in einen nach unten abragenden Stabilisierungsfortsatz 68. Der Stabilisierungsfortsatz 68 weist eine gewisse, wenn auch nur relativ geringe Erstreckung in Längsrichtung der Traverse 62 auf. Das Vorsehen eines Stabilisierungsfortsatzes, wie aus Figur 10 ersichtlich, hat zum Vorteil, dass durch die dadurch bedingte stufige Ausbildung der Unterseite der Traverse 62 die nutzbare Querschnittsfläche des Kabelkanals durch die Seitenwangen 67 nur kaum reduziert wird gegenüber einer Traverse, wie diese beispielsweise in den Figuren 8a bis 8c gezeigt ist. Gleichwohl ist die Traverse 62 deutlich höher belastbar als die Traverse 44.

### Bezugszeichenliste

- 1: Unterfluranschlussdose
- 2: Nivellierrahmen
- 3: Montageschutzblech
- 4: Öffnung
- 5: Nivellierschraube
- 6: Dübel
- 7: Schalungsrahmen
- 8: Rahmenbauteil
- 9: Materialaussparung
- 10: Schraube
- 11: Kopf
- 12: Betätigungsöffnung
- 13: Unterboden
- 14: Estrich
- 15: Kanal
- 16: Halteelement
- 17: Nivellierrahmen
- 18: oberer Schenkel
- 19: unterer Schenkel
- 20: Nivellierschraube
- 21: Kopf
- 22: Betätigungsöffnung
- 23: Ausnehmung
- 24: Schaft
- 25: Kanal
- 26: Nivellierrahmen
- 27: Nivellierschraube
- 28: Schaumstoffstreifen
- 29: Halteelement
- 30: Betätigungshandhabe
- 31: Nivellierschraube
- 32: Nivellierrahmen
- 33: Nut
- 34: Halteelement
- 35: Schenkel
- 36: Schenkel
- 37: Aufnahme
- 38: Abschnitt
- 39: Betätigungshandhabe
- 40: Kabelkanal
- 41: Nivellierrahmen
- 42: Seitenprofil
- 43: Seitenprofil
- 44: Traverse
- 45: Seitenschürze
- 46: Seitenschürze
- 47: Kanalhohlraum
- 48: Estrichanker
- 49: Estrichanker
- 50: Nivelliereinheit
- 51: Nivellierschraube
- 52: Gewindehülse
- 53: Schwenkriegel
- 54: Aufnahmeöffnung
- 55: Einsetzabschnitt
- 56: Halteabschnitt
- 57: Schraube
- 58: Riegelabschnitt
- 59: Nivellierschraubenaufnahme
- 60: Nut
- 61: ungekrümmter Abschnitt
- 62: Traverse
- 63: Nivelliereinheit
- 64: Nivellierschraube
- 65: Gewindehülse
- 66: Hilfsteil
- 67: Seitenwange
- 68: Stabilisierungsfortsatz

## Patentansprüche

1. Unterflurinstallationsbauteil mit einem vor seinem Einbau in einen Fußboden, insbesondere einen durch Gießen zu erstellenden Fußboden unter Verwendung von Nivellierschrauben (5, 20, 27, 31, 51, 64) abgestützten Nivellierrahmen (2, 17, 26, 32, 41), **dadurch gekennzeichnet, dass**
- die Nivellierschrauben (5, 20, 27, 31, 51, 64) in ihrer den Nivellierrahmen abstützenden Anordnung an ein der Innenseite des Unterflurinstallationsbauteils (1, 15, 25, 40) zugehöriges Teil des Nivellierrahmens (2, 17, 26, 32, 41) angeschlossen sind und
- die Nivellierschrauben (5, 20, 27, 31, 51) von dem Nivellierrahmen (2, 17, 26, 32, 41) lösbar sind *oder die* Nivellierschrauben (64) jeweils Teil einer ein oder mehrere weitere Elemente (66) umfassenden Nivelliereinheit (63) sind und wenigstens eines der eine solche Nivelliereinheit (63) bildenden Elemente (66) aus der Einheit lösbar ist.

2. Unterflurinstallationsbauteil nach Anspruch 1, **dadurch gekennzeichnet, dass** die Nivellierschrauben (64) jeweils unmittelbar in eine dem Nivellierrahmen zugeordnete Gewindebohrung eingreifen.

3. Unterflurinstallationsbauteil nach Anspruch 1, **dadurch gekennzeichnet, dass** die Nivellierschrauben (5, 20, 27, 31, 51) durch ein oder mehrere, lösbar an dem Nivellierrahmen (2, 17, 26, 32, 41) angeschlossene Halteelemente (3, 16, 29, 34, 52) gegenüber dem Nivellierrahmen (2, 17, 26, 32, 41) in Richtung der Längsachse der Nivellierschrauben (5, 20, 27, 31, 51) fixiert sind.

4. Unterflurinstallationsbauteil nach Anspruch 3, **dadurch gekennzeichnet, dass** der Kopf (11, 21) der Nivellierschrauben (5, 20, 27) im Durchmesser größer ist als der daran angrenzende Schraubenschaft und zur Fixierung einer solchen Nivellierschraube (5, 20, 27) in Richtung zum Nivellierrahmen (2, 17, 26) die Unterseite des Kopfes (11, 21) an dem Nivellierrahmen (2, 17, 26) anliegt und dass das an den Nivellierrahmen (2, 17, 26) angeschlossene Halteelement (3, 16, 29) zur Fixierung der Nivellierschraube (5, 20, 27) in entgegengesetzter Richtung mit einem Abschnitt die Oberseite des Kopfes (11) der Nivellierschraube (5, 20, 27) zumindest teilweise übergreift.

5. Unterflurinstallationsbauteil nach Anspruch 4, **dadurch gekennzeichnet, dass** das Halteelement (3) mittels Schrauben (10) oberseitig an den Nivellierrahmen (2) angeschlossen ist.

6. Unterflurinstallationsbauteil nach Anspruch 4 oder 5, **dadurch gekennzeichnet, dass** ein einziges Halteelement (3) zum Fixieren aller Nivellierschrauben (5) vorgesehen ist.

7. Unterflurinstallationsbauteil nach Anspruch 6, **dadurch gekennzeichnet, dass** das Halteelement ein Montageschutzblech (3) mit jeweils einer Befestigungsöffnung (12) an den eine Nivellierschraube (5) im Bereich ihres Kopfes (11) bedeckenden Abschnitt zum Durchführen eines Werkzeuges aufweist, wobei die Betätigungsöffnungen (12) einen kleineren Durchmesser haben als der Kopf (11) der darunter befindlichen Nivellierschraube (5).

8. Unterflurinstallationsbauteil nach Anspruch 4 oder 5, **dadurch gekennzeichnet, dass** jeder Nivellierschraube (20, 27) ein separates Halteelement (16, 29) zu seiner Fixierung an dem Nivellierrahmen (17, 26) zugeordnet ist, wobei ein solches Halteelement (16, 29) nach Art einer Spange durch einen oberen und einen unteren, jeweils an der Oberfläche des Nivellierrahmens (17, 26) anliegenden Schenkel (18, 19) einen Randabschnitt des Nivellierrahmens (17, 26) einfassend ausgebildet ist.

9. Unterflurinstallationsbauteil nach Anspruch 8, **dadurch gekennzeichnet, dass** der untere Schenkel (19) zur Aufnahme des Schraubenschaftes gegabelt ist und der obere Schenkel (18) eine Betätigungsöffnung (22) mit einem Durchmesser aufweist, der kleiner ist als der Kopf der darunter befindlichen Nivellierschraube (20, 27).

10. Unterflurinstallationsbauteil nach Anspruch 3, **dadurch gekennzeichnet, dass** der Kopf der Nivellierschrauben (31) im Durchmesser größer ist als der daran angrenzende Schraubenschaft und zur Fixierung einer solchen Nivellierschraube (31) in Richtung zum Nivellierrahmen (32) die Unterseite des Kopfes an dem Nivellierrahmen (32) anliegt und die Nivellierschrauben (31) unterhalb des Kopfes eine umlaufende Nut (33) aufweisen und dass das Halteelement (34) nach Art einer gegabelten, mit jeweils einem Schenkel (35, 36) in die Nut (33) eingreifenden Haltespange ausgebildet ist.

11. Unterflurinstallationsbauteil nach Anspruch 10, **dadurch gekennzeichnet, dass** die durch die Schenkel (35, 36) gebildete Aufnahme (37) einen hinterschnittenen Abschnitt (38) zum Anordnen der Nut (33) einer Nivellierschraube (31) umfasst und die beiden Schenkel (35, 36) aufgrund ihrer Materialelastizität zum Einbringen des Nutabschnittes der Nivellierschraube (31) in den hinterschnittenen Abschnitt (38) des Halteelementes (34) und umgekehrt gegeneinander bewegbar sind.

12. Unterflurinstallationsbauteil nach einem der Ansprüche 8 bis 11, **dadurch gekennzeichnet, dass** die Halteelemente (29, 34) eine Handhabe (30, 39) aufweisen.

13. Unterflurinstallationsbauteil nach Anspruch 1, **dadurch gekennzeichnet, dass** die Nivellierschraube (51, 64) Teil einer Nivelliereinheit (50, 63) ist, die neben der Nivellierschraube (51, 64) eine Gewindehülse (52, 65) umfasst, bei der die Gewindehülse (52, 65) ein oder mehrere nach außen hin offenen Nutabschnitte oder eine nach außen hin offene umlaufende Nut (60) zum Anschließen der Gewindehülse (52, 65) an den Nivellierrahmen (41) oder an einen Teil (44, 62) desselben aufweist und die Nivellierschraube (51, 64) mit ihrem Gewinde in die Gewindehülse (52, 65) eingreift.

14. Unterflurinstallationsbauteil nach Anspruch 13, **dadurch gekennzeichnet, dass** der Nivellierrahmen (41) oder ein Teil desselben zum Anbringen einer Gewindehülse (52) jeweils schlüssellochförmige Anschlussöffnungen (54) aufweist, die einen Einsetzabschnitt (55) zum Einbringen der Gewindehülse (52) sowie einen Halteabschnitt (56) umfassen, in dem die diesen Abschnitt begrenzenden Bereiche in den oder die Nutabschnitte bzw. die umlaufende Nut (60) der Gewindehülse (52) eingreifen.

15. Unterflurinstallationsbauteil nach Anspruch 14, **dadurch gekennzeichnet, dass** das Nutentiefste der Gewindehülse (52) zur Verdrehsicherung derselben, wenn diese in den Halteabschnitt (56) eingeführt ist, an zwei einander diametral gegenüberliegenden Abschnitten (61) ungekrümmt ist.

16. Unterflurinstallationsbauteil nach Anspruch 14 oder 15, **dadurch gekennzeichnet, dass** der Nivelliereinheit (50) ein Verriegelungselement (53) zugeordnet ist, durch das in seiner verriegelnden Stellung die in den Halteabschnitt (56) einer Anschlussöffnung (54) eingesetzte Gewindehülse (52) mit ihrer Nivellierschraube (51) gehalten ist.

17. Unterflurinstallationsbauteil nach Anspruch 16, **dadurch gekennzeichnet, dass** als Verriegelungselement ein bodenseitig verankerter Schwenkriegel (53) vorgesehen ist.
